# FASCICULE DE BREVET EUROPEEN

(11) **EP 2 130 717 B1**
(45) Date de publication et mention de la délivrance du brevet: **26.01.2011**
(21) Numéro de dépôt: 09161143.4
(22) Date de dépôt: 26.05.2009
(51) Int. Cl.: B60Q 1/04, B62D 25/08

(54) **Systéme pour limiter des dommages susceptibles, en cas de choc, d'être causés par une optique à au moins un organe d'un véhicule automobile**
System zur Begrenzung von Schäden im Fall von Aufprall, die von einem Sichtelement oder zumindest einem Organ eines Kraftfahrzeugs erzeugt werden könnten
System for limiting the damage that can be caused, in the event of a crash, by an optical unit to at least one unit of an automobile

(30) Priorité: 05.06.2008 FR 0853708
(43) Date de publication de la demande: 09.12.2009
(73) Titulaire: Peugeot Citroën Automobiles SA, 78140 Vélizy-Villacoublay (FR)
(72) Inventeur: Benane, Saïd, 94550, CHEVILLY LARUE (FR)

(56) Documents cités:
- EP-A- 1 122 126
- EP-A- 1 736 358
- DE-A1-102006 007 449
- FR-A- 2 789 028
- US-A1- 2007 091 624

## Description

La présente invention concerne un système pour limiter des dommages susceptibles, en cas de choc, d'être causés par une optique à au moins un organe d'un véhicule automobile.

De tels systèmes sont généralement des systèmes prévus pour absorber les chocs, en particulier les chocs à faible vitesse, tout en préservant un maximum des éléments de l'automobile. Ainsi, un tel système a pour but de limiter le nombre des éléments à réparer, de préserver le plus possible les organes essentiels au fonctionnement de l'automobile (moteur, transmission, direction) et faire en sorte que si certains organes de l'automobile sont endommagés, le nombre de ces organes endommagés soit le plus réduit possible et que le coût de réparation de ces organes endommagés soit le plus faible possible.

Un boîtier d'optique avant est un élément très rigide dont un recul en cas de choc est susceptible d'endommager un organe ou un élément qui le porte ou qui le jouxte, particulièrement un organe ou un élément devant lequel il est disposé, notamment l'aile correspondante.

Les documents FR 2 808 075 A, FR 2 844 757 A et FR 2 897 804 A, présentent de tels systèmes permettant de réduire au maximum les conséquences d'un choc.

Le document FR 2 808 075 A décrit un boîtier d'optique enveloppant comportant une ligne de rupture, de sorte qu'une partie du boîtier reste intacte alors qu'une autre se déforme avec la glace de l'optique, cette déformation absorbant au moins une partie de l'énergie d'un choc.

Le document FR 2 844 757 A décrit un boîtier d'optique fixé à l'aide de moyens frangibles dont la rupture absorbe au moins une partie de l'énergie d'un choc.

Le document FR 2 897 804 A décrit un boîtier d'optique adapté pour absorber un choc piéton en se déplaçant le long d'une rampe, une patte et une butée étant prévues pour absorber au moins une partie de l'énergie d'un choc et la transmettre à la structure du véhicule.

Le document FR 2 789 028 A décrit un système pour limiter des dommages susceptibles, en cas de choc, d'être causés par une optique à au moins un organe d'un véhicule automobile, le système comprenant une butée disposée sur un élément faiblement déformable dudit véhicule, au voisinage dudit organe, et un appui formé à distance et en vis-à-vis de la butée, l'appui étant disposé sur ladite optique, dans une zone fusible d'un boîtier de ladite optique qui est adjacente audit organe.

Les dispositifs de l'art antérieurs ne sont cependant pas adaptés à certains véhicules qui comprennent des optiques avant particulièrement enveloppantes et s'étendant transversalement loin en direction d'un plan médian longitudinal de l'automobile. Une telle optique vient partiellement s'étendre devant le radiateur. En effet, celui-ci est généralement disposé frontalement, à l'arrière de la face avant du véhicule. L'optique, en reculant sous un choc, est de ce fait susceptible d'endommager le radiateur, même à faible vitesse. Or, le radiateur est un organe vital pour le moteur, qui peut être irrémédiablement endommagé s'il n'est pas correctement refroidit. Outre une réparation coûteuse, cela peut contraindre à une immobilisation du véhicule et à son remorquage.

Le but de l'invention est de proposer, notamment pour un véhicule automobile ayant des optiques enveloppantes, un système pour améliorer la réparabilité du véhicule, permettant d'en préserver au mieux les organes, et particulièrement son radiateur, en cas de choc provocant le déplacement de l'optique d'avant en arrière.

Selon l'invention, un tel système pour limiter des dommages susceptibles, en cas de choc, d'être causés par l'optique à au moins un organe du véhicule automobile comprend une butée disposée sur un élément faiblement déformable dudit véhicule, au voisinage dudit organe, et un appui formé à distance et en vis-à-vis de la butée, l'appui étant disposé sur ladite optique, dans une zone fusible d'un boîtier de ladite optique qui est adjacente audit organe.

Selon l'invention, un tel système est **caractérisé en ce que** l'organe est un radiateur du véhicule, en ce que l'élément faiblement déformable est un montant fournissant un maintien latéral pour ledit radiateur et en ce que la butée est fixée à une extrémité supérieure dudit montant, ladite butée étant en tôle pliée et comprenant une patte avant, repliée vers le bas et prévue pour venir en butée avec l'appui.

La zone fusible du boîtier est avantageusement proche d'un plan médian du véhicule. Le boîtier peut comprendre au moins une ligne de fusibilité périphérique à la zone fusible, cette ligne pouvant être interrompue sur un côté de ladite zone fusible le plus éloigné du plan médian, de sorte qu'un raccord y est formé avec le reste du boîtier. Cette disposition permet de transmettre une partie des efforts dus au choc au reste du boîtier.

L'élément faiblement déformable peut être un montant qui fournit un maintien latéral pour ce radiateur. La butée peut avantageusement être fixée à une extrémité supérieure du montant, et peut en outre être utilisée pour y maintenir verticalement le radiateur par vissage.

La butée peut être en tôle pliée et peut comprendre parmi les suivantes :
- au moins une patte, disposée à l'arrière de la butée et repliée vers le bas, la butée étant de préférence fixée sur le montant par soudure de l'une au moins des pattes,
- une paroi, disposée sensiblement horizontalement, le système comprenant en outre une plaque de renfort formant une doublure pour la paroi.

La butée peut avantageusement comprendre une forme complémentaire à une forme correspondante du boîtier de sorte que, lors du choc, le bord constitue une butée latérale pour le boîtier.

On note que le côté gauche ou le côté droit est à considérer en regardant dans le sens de la marche avant du véhicule.

D'autres particularités et avantages de l'invention ressortiront encore de la description ci-après, relative à un exemple non limitatif.

Aux dessins annexés :
- la figure 1 est une vue de trois-quarts arrière d'une optique avant, côté gauche, d'un véhicule automobile équipé d'un système selon l'invention et d'éléments environnant cette optique ;
- la figure 2 est une vue de face de l'optique et des éléments de la figure 1 ;
- la figure 3 est une vue de trois-quarts avant d'une butée, pour le système selon l'invention des figures précédentes, et de son environnement ;
- la figure 4 est une vue plus en détail et éclatée de la figure 4 ;
- la figure 5 est une vue partielle en perspective, de dessus et de trois-quarts arrière, du système avant un choc ;
- la figure 6 est une autre vue, de dessus, du système avant le choc ;
- la figure 7 est une vue, similaire à celle de la figure 5, du système après un choc ; et,
- la figure 8 est une vue, similaire à celle de la figure 6, du système après le choc.

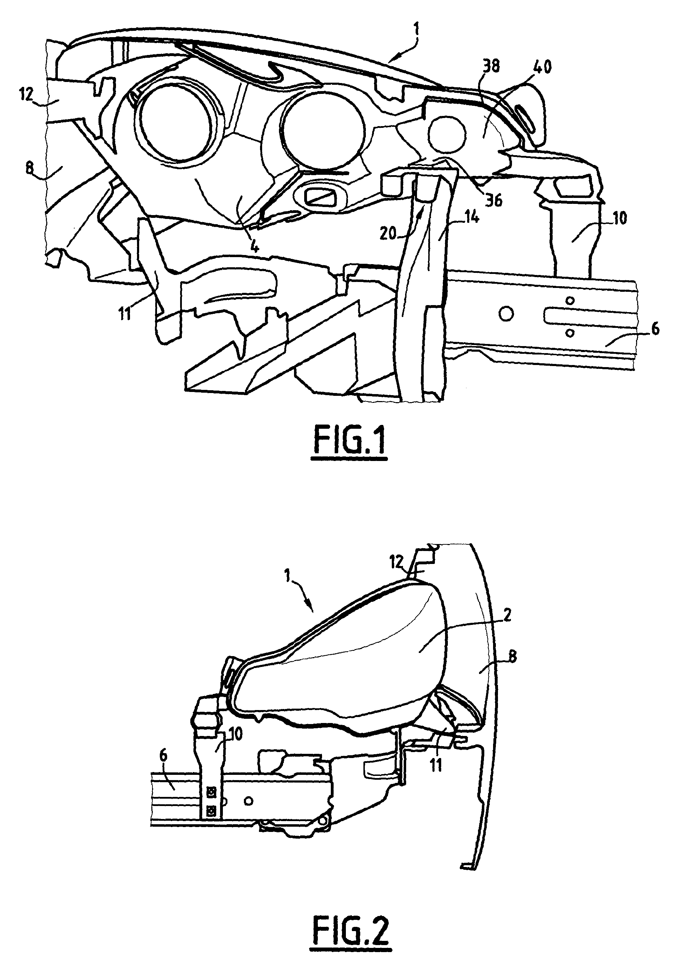

Les figures représentent une optique 1 disposée à l'avant et à gauche d'un véhicule. L'optique comprend une glace 2 et un boîtier opaque 4 disposé à l'arrière de la glace 2. Le véhicule est sensiblement symétrique relativement à un plan médian vertical P, au moins pour ce qui est relatif à l'invention. On décrira donc l'invention seulement en ce qui concerne la partie gauche du véhicule. Le plan P se situe à la gauche de la figure 2. Il n'est pas représenté aux figures. Bien entendu, un même système selon l'invention est avantageusement prévu, symétriquement, pour la partie droite du même véhicule.

D'autres éléments du véhicule sont généralement visibles sur les figures. Une poutre transversale 6 forme une structure avant du châssis du véhicule et sert de support à un pare-choc avant et donc d'absorbeur en cas de choc avant. Le pare-choc n'est pas représenté aux figures. Une aile 8 avant gauche du véhicule est aussi représentée aux figures. L'optique est fixée par des pattes et équerres 10, 11, 12 à la poutre 6 et à l'aile 8.

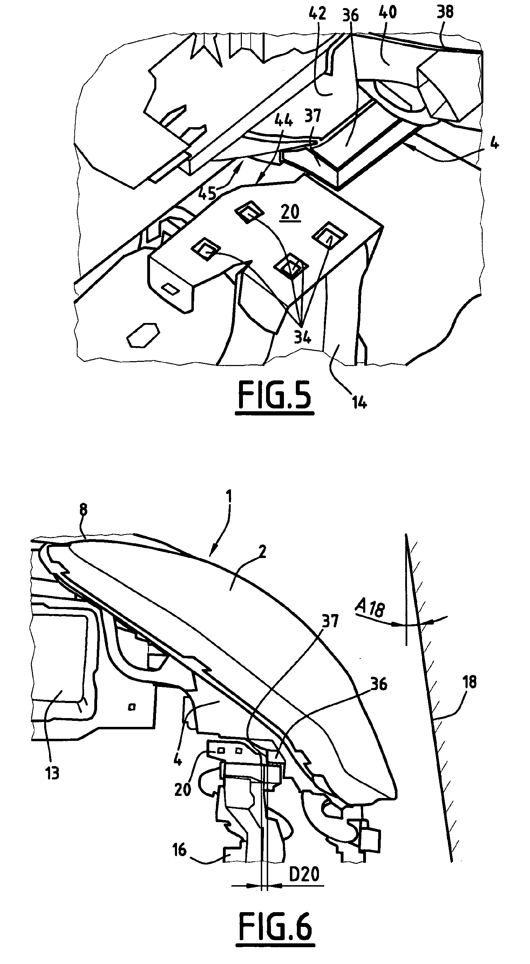

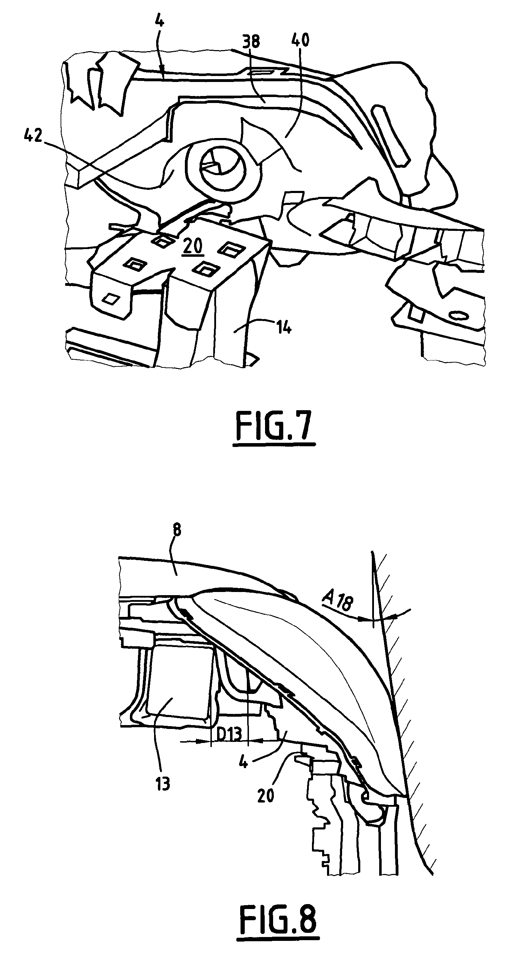

Un boîtier 13, destiné à recevoir par exemple des organes électroniques permettant la commande du fonctionnement du moteur, est disposé à proximité de l'aile 8, à l'arrière de l'optique 1. Comme illustré aux figures 6 et 8, une distance D13 sépare le boîtier 4 d'avec le boîtier 13.

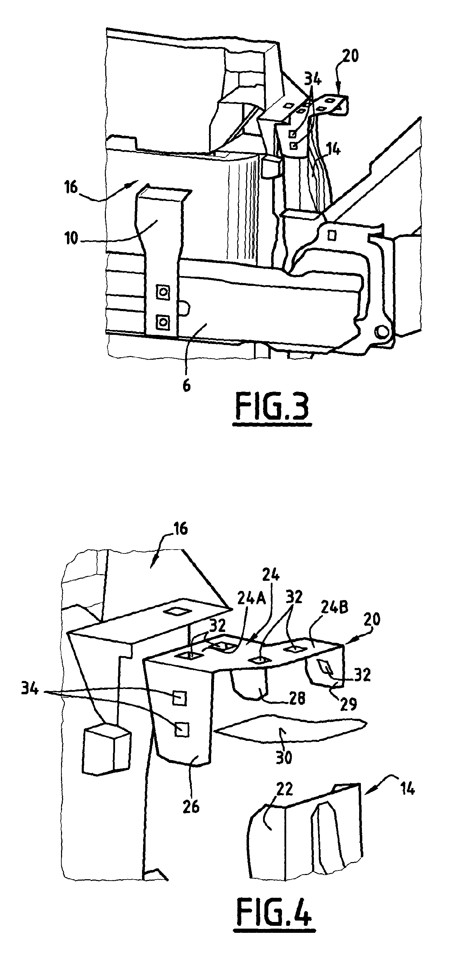

Le châssis du véhicule comprend aussi deux montants, dont le montant gauche 14 est illustré aux figures. Ce montant 14 est disposé sensiblement verticalement, à l'arrière de la poutre 6, qui y est fixée. Comme particulièrement illustré à la figure 3, ce montant 14 sert de support à un radiateur 16 du véhicule.

Le montant 14 a une section horizontale sensiblement en forme de U, ouvert en direction du plan P. Les deux montants ensemble, forment une glissière pour le montage et le support du radiateur.

L'optique est d'un type enveloppant. C'est-à-dire que dans la partie gauche de l'optique la glace 2 prolonge l'aile vers l'avant, et dans sa partie droite l'optique s'étend au-dessus de la poutre, jusque devant le montant 14 et, au-delà, devant une partie du radiateur 16. L'optique 1 est donc une pièce massive susceptible de venir prendre appui sur certains éléments, notamment l'aile 8 et le radiateur 16.

Un système selon l'invention est prévu pour absorber un choc basse vitesse à 16 km/h contre un mur 18 faisant un angle A18 de 10 degrés par rapport à un plan transversal au véhicule de sorte que le radiateur ne soit pas endommagé, c'est-à-dire sans que l'optique vienne appliquer des charges excessives sur le radiateur. Le choc et la disposition du mur relativement à l'optique 1 sont illustrés aux figures 5 à 8.

Le système selon l'invention prévoit une butée 20 disposée à cheval sur une extrémité supérieure 22 du montant 14. La butée 20 comprend une paroi supérieure 24, disposée sensiblement horizontalement. La paroi supérieure 24 comprend deux zones 24A,24B. Une première 24A des zones 24A,24B recouvre l'extrémité supérieure 22 du montant 14. La deuxième 24B des zones 24A,24B s'étend à la gauche de la première zone 24A, et vers l'arrière au-delà de la première zone 24A.

La butée 20 comprend aussi :
- une patte avant 26 s'étendant vers le bas à l'avant de la paroi supérieure 24, disposée sensiblement verticalement et transversalement ;
- une première patte arrière 28 s'étendant vers le bas à l'arrière de la première zone 24A de la paroi supérieure, cette première patte arrière étant disposée sensiblement verticalement et transversalement ; et,
- une deuxième patte arrière 29 s'étendant vers le bas à l'arrière de la deuxième zone 24B de la paroi supérieure, cette deuxième patte arrière étant disposée sensiblement verticalement et transversalement.

Au travers de chacune des deux zones 24A,24B, deux fenêtres 32 disposées l'une derrière l'autre, sont prévues pour alléger la butée. Une autre fenêtre 32 est aussi prévue dans la deuxième patte arrière 29. Une plaque de renfort 30 est prévue pour être disposée sous la paroi 24. Cette plaque 30 a sensiblement la forme de la paroi 24.

Le déport vers l'arrière et la gauche de la deuxième zone 24B relativement à la première zone 24A permet principalement d'augmenter la résistance de la butée dans un plan horizontal. La deuxième patte arrière 29 permet de renforcer la deuxième zone, afin de retarder son fléchissement sous l'effet d'efforts latéraux.

La butée est fixée par des points 34 de soudure sur les ailes du U formé par le montant 14. Deux points 34 de soudure superposés sont formés sur la patte avant 26. Un point de soudure 34 est formé sur la première patte arrière 28.

Le radiateur 16 est fixé verticalement par vissage dans la plaque de renfort 30, au travers d'une des fenêtres 32, la plus en avant de la première zone 24A. Du fait de cette fixation, la plaque de renfort 30 est empêchée de tout déplacement horizontal, tout en étant pincée verticalement entre la paroi 24 et l'extrémité 22 du montant 14. Cette fixation par vis, grâce aux soudures 34, empêche tout déplacement vertical du radiateur 16. Le radiateur est maintenu horizontalement par les montants 14.

Le boîtier 4 de l'optique 1, comprend un appui 36, de forme sensiblement parallélépipédique. Cet appui s'étend vers l'arrière en vis-à-vis de la patte avant 26 de la butée 20. Une face arrière 37 de l'appui fait face à la patte avant. Lorsque aucune déformation par choc n'a été subie par le véhicule, une distance D20 sépare la face 37 de la patte 26.

Des lignes de fusibilité 38 sont prévues dans la paroi du boîtier 4. Les lignes de fusibilité délimitent une zone fusible 40 autour de l'appui 36. La zone fusible correspond sensiblement à l'extrémité droite du boîtier 4. En particulier, une ligne de fusibilité 38 périphérique suit un bord de la paroi du boîtier 4, au-dessus, à la droite et en dessous de la zone fusible 40. Cette ligne de fusibilité 38 périphérique est interrompue à la gauche de la zone fusible 40, de sorte qu'un raccord 42 est formé entre la zone fusible et le reste de la paroi du boîtier 4, dans la continuité de ce reste de la paroi. D'autres lignes de fusibilités 38 sont notamment formées le long des arrêtes de l'appui sensiblement parallélépipédique 36.

Des moyens, qui peuvent être des moyens connus, et qui ne seront pas décrits, sont associés à la partie gauche de l'optique, pour limiter son recul et son impact sur les éléments qui l'environnent, en particulier pour protéger le boîtier 13, situé à proximité de la partie gauche du boîtier 4.

On va maintenant décrire le fonctionnement du système selon l'invention dans le cadre de l'exemple illustré et en référence aux figures 5 à 8.

Les figures 5 et 6 illustrent le système avant un choc contre l'obstacle 18. L'appui 36 du boîtier est à la distance D20 de la patte avant 26 de la butée 20, dans la partie droite de boîtier 4. Les lignes de fusibilité 38 sont encore intactes et maintiennent une cohésion et une étanchéité du boîtier 4. Dans sa partie gauche, le boîtier est à une distance D13 (sensiblement égale à 63 mm dans l'exemple illustré) du boîtier 13.

Les figures 7 et 8 illustrent le système après un choc à 16 km/h contre l'obstacle 18. L'appui 36 est venu au contact avec la patte avant 26 de la butée 20. L'effort dû à ce contact a provoqué la rupture des lignes de fusibilité. Le système permet ainsi de limiter la charge appliquée sur le montant 14, et donc de limiter indirectement la charge appliquée sur le radiateur 16. Néanmoins, le raccord 42 entre la zone fusible 40 et le reste du boîtier 4, s'est comporté comme une articulation et a coopéré avec les autres moyens, associés à la partie gauche du boîtier, pour limiter le recul de l'optique 1. Ainsi, il existe, après le choc, une distance D13 résiduelle (sensiblement égale à 30mm dans l'exemple illustré) entre le boîtier 4 et le boîtier 13. La paroi supérieure 24 de la butée comprend un bord latéral gauche 44, qui relie la patte avant 26 à la deuxième patte arrière 29. Le bord 44 a une forme complémentaire à une forme correspondante 45 du boîtier 4 (voir figure 5), de sorte que lors du choc ce bord 44 constitue une butée latérale pour le boîtier, limitant son déplacement transversal en direction du plan médian P.

Dans un mode de réalisation préféré, la butée 20 et la plaque de renfort sont réalisées chacune dans une tôle d'une épaisseur de 1,47 mm, dans un acier au carbone de type E275D. La butée 20 est réalisée par pliage.

Bien sûr, l'invention n'est pas limitée à l'exemple qui vient d'être décrit et de nombreux aménagements peuvent être apportés à cet exemple sans sortir du cadre de l'invention.

## Revendications

1. Système pour limiter des dommages susceptibles, en cas de choc, d'être causés par une optique (1) à au moins un organe (16) d'un véhicule automobile, le système comprenant une butée (20) disposée sur un élément (14) faiblement déformable dudit véhicule, au voisinage dudit organe (16), et un appui (36) formé à distance (D20) et en vis-à-vis de la butée (20), l'appui (36) étant disposé sur ladite optique, dans une zone fusible (40) d'un boîtier (4) de ladite optique (1) qui est adjacente audit organe (16), **caractérisé en ce que** l'organe (16) est un radiateur du véhicule, **en ce que** l'élément faiblement déformable est un montant (14) fournissant un maintien latéral pour ledit radiateur (16) et **en ce que** la butée est fixée à une extrémité supérieure du montant (14), ladite butée étant en tôle pliée et comprenant une patte avant (26), repliée vers le bas et prévue pour venir en butée avec l'appui (36).

2. Système selon la revendication 1, **caractérisé en ce que** la zone fusible (40) du boîtier est proche d'un plan médian (P) du véhicule.

3. Système selon la revendication 2, **caractérisé en ce que** le boîtier comprend au moins une ligne de fusibilité (38) périphérique à la zone fusible (40) interrompue sur un côté de ladite zone fusible (40) le plus éloigné du plan médian, de sorte qu'un raccord (42) y est formé avec le reste du boîtier (4).

4. Système selon la revendication 1 à 3, **caractérisé en ce que** la butée est en tôle pliée et comprend au moins une patte (28,29), disposée à l'arrière de la butée et repliée vers le bas, la butée étant de préférence fixée sur le montant (14) par soudure de l'une au moins des pattes (26,28).

5. Système selon l'une des revendications 1 à 4, **caractérisé en ce que** la butée est en tôle pliée et comprend une paroi (24), disposée sensiblement horizontalement, ledit système comprenant en outre une plaque de renfort (30), formant une doublure pour ladite paroi (24).

6. Système selon l'une des revendications 1 à 5, **caractérisé en ce qu'**un bord latéral (44) de la butée a une forme complémentaire à une forme correspondante (45) du boîtier (4) de sorte que lors du choc ledit bord constitue une butée latérale pour ledit boîtier (4).

7. Système selon l'une quelconque des revendications 1 à 6, **caractérisé en ce que** le radiateur est maintenu verticalement par vissage dans la butée (20).

## Claims

1. A system for limiting damage liable, in the event of an impact, to be caused by a optics (1) to at least one member (16) of a motor vehicle, the system comprising an abutment (20) arranged on a slightly deformable element (14) of said vehicle, in the vicinity of said member (16), and a support (36) formed at a distance (D20) and facing the abutment (20), the support (36) being arranged on said optics, in a fusible area (40) of a housing (4) of said optics (1) which is adjacent to said member (16), **characterised in that** the member (16) is a radiator of the vehicle, **in that** the slightly deformable element is a column (14) providing lateral support for said radiator (16) and **in that** the abutment is fixed to an upper end of the column (14), said abutment being made of bent sheet metal and comprising a front tab (26), folded down and intended to abut against the support (36).

2. The system according to claim 1, **characterised in that** the fuse zone (40) of the housing is near a median plane (P) of the vehicle.

3. The system according to claim 2, **characterised in that** the housing comprises at least one fusibility line (38) peripheral to the fusible area (40) discontinued on one side of said fusible area (40) furthest from the median plane, such that a connection (42) is formed therein with the rest of the housing (4).

4. The system according to claim 1 to 3, **characterised in that** the abutment is made of bent sheet metal and comprises at least one tab (28,29) arranged to the rear of the abutment and folded down, the abutment being preferably attached to the column (14) by welding at least any one of the tabs (26,28).

5. The system according to any of claims 1 to 4, **characterised in that** the abutment is made of bent sheet metal and comprises a wall (24), arranged substantially horizontally, said system further comprising a reinforcement plate (30) forming a lining for said wall (24).

6. The system according to any of claims 1 to 5, **characterised in that** a side edge (44) of the abutment has a complementary shape to a corresponding shape (45) of the housing (4) such that, upon the impact, said edge provides a lateral abutment for said housing (4).

7. The system according to any of claims 1 to 6, **characterised in that** the radiator is held upright by screwing into the abutment (20).

## Patentansprüche

1. System zur Einschränkung der Schäden, die im Fall eines Aufpralls durch eine Scheinwerferkappe (1) an mindestens einem Teil (16) eines Kraftfahrzeugs verursacht werden können, wobei das System einen Anschlag (20) aufweist, der sich auf einem geringfügig verformbaren Element (14) in der Nähe des Teils (16) befindet, und ein in einem Abstand (D20) und gegenüber dem Anschlag (20) gebildetes Widerlager (36), wobei sich das Widerlager (36) auf der Scheinwerferkappe in einem Schmelzbereich (40) eines Gehäuses (4) der Scheinwerferkappe (1) befindet, die an dem Teil (16) anliegt, **dadurch gekennzeichnet, dass** das Teil (16) ein Kühler des Fahrzeugs ist, dass das geringfügig verformbare Element ein Träger(14) ist, der einen seitlichen Halt für den Kühler (16) bietet und **dadurch**, dass der Anschlag an einem oberen Ende des Trägers (14) befestigt ist, wobei der Anschlag aus gefaltetem Blech ist und eine vordere Pratze (26) aufweist, die nach unten gefaltet und vorgesehen ist, um mit dem Widerlager (36) in Anschlag zu kommen.

2. System nach Anspruch 1, **dadurch gekennzeichnet, dass** sich der Schmelzbereich (40) des Gehäuses in der Nähe der Mittelebene (P) des Fahrzeugs befindet.

3. System nach Anspruch 2, **dadurch gekennzeichnet, dass** das Gehäuse mindestens eine Schmelzbarkeitslinie (38) in der Peripherie des Schmelzbereichs (40) aufweist, die auf einer am weitesten von der Mittelebene entfernten Seite des Schmelzbereichs (40) ununterbrochen ist, so dass dort eine Verbindung (42) mit dem Rest des Gehäuses (4) gebildet wird.

4. System nach Anspruch 1 bis 3, **dadurch gekennzeichnet, dass** der Anschlag aus gefaltetem Blech ist und mindestens eine Pratze (28, 29) aufweist, die im hinteren Bereich des Anschlags angeordnet ist und nach unten gefaltet ist, wobei der Anschlag vorzugsweise durch Schweißen mindestens einer der Pratzen (26, 28) am Träger (14) befestigt ist.

5. System nach einem der Ansprüche 1 bis 4, **dadurch gekennzeichnet, dass** der Anschlag aus gefaltetem Blech ist und eine Wandung (24) aufweist, die etwa horizontal angeordnet ist, wobei das System außerdem ein Verankerungssegment (30) aufweist, das für die Wand (24) eine Verkleidung bildet.

6. System nach einem der Ansprüche 1 bis 5, **dadurch gekennzeichnet, dass** eine Seitenkante (44) des Anschlags eine zu einer entsprechenden Form (45) des Gehäuses (4) komplementäre Form hat, so dass die Kante beim Aufprall einen seitlichen Anschlag für das Gehäuse (4) darstellt.

7. System nach einem der vorhergehenden Ansprüche 1 bis 6, **dadurch gekennzeichnet, dass** der Kühler durch Verschraubung im Anschlag (20) vertikal gehalten wird.
